# EUROPEAN PATENT APPLICATION

(11) **EP 2 648 407 A2**
(43) Date of publication of application: **09.10.2013**
(21) Application number: 11845465.1
(22) Date of filing: 02.12.2011
(51) Int. Cl.: H04N 7/24, H04N 13/00

(54) **METHOD AND APPARATUS FOR TRANSMITTING STEREOSCOPIC VIDEO INFORMATION**

(30) Priority: 02.12.2010 KR 20100122268; 02.12.2011 KR 20110128224
(71) Applicant: Electronics And Telecommunications Research Institute, Daejeon-si 305-700 (KR)
(72) Inventor: LEE, Bong Ho, Daejeon-si 305-747 (KR); CHEONG, Won Sik, Daejeon-si 305-761 (KR); YUN, Kug Jin, Daejeon-si 305-759 (KR); LEE, Eung Don, Daejeon-si 305-761 (KR); JEONG, Se Yoon, Daejeon-si 306-769 (KR); HUR, Nam Ho, Daejeon-si 305-768 (KR); CHOI, Jin Soo, Daejeon-si 305-750 (KR); LEE, Soo In, Daejeon-si 302-772 (KR); KIM, Jin Woong, Daejeon-si 305-761 (KR)
(74) Representative: Betten & Resch
(86) International application number: PCT/KR2011/009319
(87) International publication number: WO 2012/074331

(57) **Abstract**

Provided are a method and an apparatus for transmitting stereoscopic video information capable of providing a stereoscopic video service. The method for transmitting stereoscopic video information comprises the steps of: creating a signaling table including video-related information; and transmitting the signaling table and the video, wherein the signaling table can include stream type information, a stereoscopic program information descriptor and/or a stereoscopic additional video stream descriptor, of the image

## Description

### [Technical Field]

The present invention relates to digital broadcasting, and more particularly, to a method and an apparatus for transmitting stereoscopic video information.

### [Background Art]

A digital broadcasting service using a three-dimensional (3D) video has been prominent together with an ultra definition television (UDTV) as the next generation broadcasting service subsequent to a high definition television (HDTV). In accordance with the development of related technologies such as release of a high definition commercial stereoscopic display, or the like, a 3DTV service capable of viewing a 3D video in each home is expected to be provided in a few years.

A 3D broadcasting service that has currently been provided commercially or on a trial basis is a service using a stereoscopic video mainly configured of a left video an a right video. In addition, as a stereoscopic video service scheme, a frame compatible scheme in which left/right videos are produced as a single picture using a format such as a side-by-side formal, a top and bottom formal, or the like, encoded, and then transmitted, a service-compatible scheme in which left/right videos are separately encoded and then transmitted, and the like, may be used.

As a scheme of providing a stereoscopic video service, there are many schemes. For example, a frame compatible (frame-packing) scheme, a service-compatible scheme, a frame compatible-compatible scheme, and the like, may be used for the stereoscopic video service.

The frame-compatible scheme is a stereoscopic video service scheme of allowing both of left/right videos to be included in a single frame, encoded, and then transmitted. As an video format used in the frame compatible scheme, there are various forms of video formats. For example, a side by side formal, a top and down format, a check board formal, or the like, may be used.

In the frame compatible scheme, video information may be transceived using existing media, broadcasting devices, and terminals that are used in existing two-dimensional (2D) broadcasting, or the like. However, in the case in which the video information is received and reproduced through an existing 2D terminal, each of the left/right videos is simultaneously reproduced by half on a single screen, such that a 2D video having the same form as that of the existing 2D broadcasting may not be reproduced.

The service-compatible scheme is a stereoscopic video service scheme of enabling the 2D video having the same form as that of the existing 2D broadcasting to be viewed even in the existing 2D terminal. For example, in the service-compatible scheme, each of left/right videos may be encoded as a separate stream and then transmitted. Here, one of the left and right videos is called a base video, the other of the left and right videos is called an additional video, and an encoding scheme used in the existing 2D broadcasting may be used for the base video. As an example, the base video may be encoded through a MPEG-2 video encoding scheme and then transmitted, and the additional video may be encoded through an advanced video coding (AVC) scheme, or the like, and then transmitted. The stereoscopic video service in the case in which the service-compatible scheme is used may maintain compatibility with the existing 2D medium or the existing 2D broadcasting.

As a protocol for digital broadcasting, for example, a program and system information protocol (PSIP), or the like, may be used. The PSIP has a configuration similar to program specific information (PSI) of a moving picture experts group (MPEG) system. The PSIP or the PSI may be configured of a set of tables having the same purpose, and each of the tables may be divided into several sections and be then transmitted.

### (Related Art Document)

(Patent Document 1) Korean Patent No. 10-0818933 ("Digital Broadcast Based Three-Dimensional Contents Service Providing Method" (Electronics and Telecommunications Research Institute, April, 4 2008 Publication)

### [Disclosure]

### [Technical Problem]

The present invention provides a method for transmitting stereoscopic video information capable of providing various forms of stereoscopic video services.

The present invention also provides an apparatus for transmitting stereoscopic video information capable of providing various forms of stereoscopic video services.

### [Technical Solution]

In an aspect, there is provided a method for transmitting stereoscopic video information including: generating a signaling table including video related information and transmitting the signaling table and the video, wherein the signaling table includes at least any one of stream type information, a stereoscopic program information descriptor, and a stereoscopic additional video stream description of the video. In this case, the stream type information may include a stream type of additional video configuring a service-compatible scheme stereoscopic video. In addition, the signaling table may be any one of a program map table (PMT) of program specific information (PSI), a virtual channel table(VCT) of program and system information protocol (PSIP), and an event information table (EIP) of the PSIP. In addition, the stereoscopic program information descriptor may be a program level descriptor and the stereoscopic additional video stream descriptor may be a stream level descriptor. The signaling table may include a field indicating whether a program included in the video is a 3D program. The signaling table includes a field indicating whether the video may be a left video. The signaling table may be a field indicating whether the additional video included in the 3D program is output, when the 3D program is reproduced in a 2D mode in a program receiving apparatus. The signaling table may include a field indicating a service-compatible mode of the program included in the video, the field indicating the service-compatible mode indicating any one of a mode using a reference video and the additional video and a mode using the reference video and a frame compatible video. The stereoscopic program information descriptor may include at least one of a field indicating whether the program included in the video is the 3D program, a field indicating whether the video is the left video, a field indicating whether the additional video included in the 3D program is output when the 3D program is reproduced in the 2D mode in the program receiving apparatus, and a field indicating the service-compatible mode of the program included in the video. The stereoscopic additional video stream descriptor may include a field indicating an encoding method of the additional video, a field indicating whether the additional video is the left video, and upsampling information corresponding to the additional video.

In another aspect, there is provided an apparatus for transmitting stereoscopic video information, including: an information generator generating a signaling table including video related information; and a transmitter transmitting the signaling table and the video, wherein the signaling table includes any one of stream type information, stereoscopic program information descriptor, and stereoscopic additional video stream descriptor of the video. The stream type information may include a stream type of the additional video configuring a service-compatible scheme stereoscopic video. The signaling table may be any one of a program map table (PMT) of program specific information (PSI), a virtual channel table (VCT) of program and system information protocol (PSIP), and an event information table (EIT) of the PSIP. The stereoscopic program information descriptor may be a program level descriptor and the stereoscopic additional video stream descriptor may be a stream level descriptor. The signaling table may include a field indicating whether a program included in the video is a 3D program. The signaling table may include a field indicating whether the video is a left video. The signaling table may be a field indicating whether the additional video included in the 3D program is output, when the 3D program is reproduced in a 2D mode in a program receiving apparatus. The signaling table may include a field indicating a service-compatible mode of the program included in the video, the field indicating the service-compatible mode indicating any one of a mode using a reference video and the additional video and a mode using the reference video and a frame compatible video. The stereoscopic program information descriptor may include at least one of a field indicating whether the program included in the video is the 3D program, a field indicating whether the video is the left video, a field indicating whether the additional video included in the 3D program is output when the 3D program is reproduced in the 2D mode in the program receiving apparatus, and a field indicating the service-compatible mode of the program included in the video. The stereoscopic additional video stream descriptor may include at least one of a field indicating an encoding method of the additional video, a field indicating whether the additional video is the left video, and upsampling information corresponding to the additional video.

### [Advantageous Effects]

With the method of transmitting stereoscopic video information according to the exemplary embodiment of the present invention, various forms of stereoscopic video services may be provided.

With the apparatus of transmitting stereoscopic video information according to the exemplary embodiment of the present invention, various forms of stereoscopic video services may be provided.

### [Description of Drawings]

FIG. 1 is a flow chart showing a method of transmitting stereoscopic video information according to an exemplary embodiment of the present invention.
FIG. 2 is a diagram showing an example of a program map table (PMT) structure for a digital broadcasting service.
FIG. 3 is a diagram showing an additional video stream type as a new strip type according to the exemplary embodiment of the present invention.
FIG. 4 is a diagram showing a descriptor tag value according to the embodiment of the present invention.
FIG. 5 is a diagram showing a stereoscopic program information descriptor according to the embodiment of the present invention.
FIG. 6 is a diagram showing a stereoscopic additional video stream descriptor according to the embodiment of the present invention.
FIG. 7 is a diagram showing a stereoscopic program information descriptor according to another embodiment of the present invention,
FIG. 8 is a diagram showing a stereoscopic additional video stream descriptor according to another embodiment of the present invention.
FIG. 9 is a block diagram of an apparatus of transmitting stereoscopic video information according to an exemplary embodiment of the present invention.

### [Mode for Invention]

Hereinafter, exemplary embodiments of the present invention will be described in detail with reference to the accompanying drawings. In describing exemplary embodiments of the present invention, well-known functions or constructions will not be described in detail since they may unnecessarily obscure the understanding of the present invention.

It will be understood that when an element is simply referred to as being 'connected to' or 'coupled to' another element without being 'directly connected to' or 'directly coupled to' another element in the present description, it may be 'directly connected to' or 'directly coupled to' another element or be connected to or coupled to another element, having the other element intervening therebetween. Further, in the present invention, "comprising" a specific configuration will be understood that additional configuration may also be included in the embodiments or the scope of the technical idea of the present invention.

Terms used in the specification, 'first', 'second', etc. can be used to describe various components, but the components are not to be construed as being limited to the terms. The terms are only used to differentiate one component from other components. For example, the 'first' component may be named the 'second' component and the 'second' component may also be similarly named the 'first' component, without departing from the scope of the present invention.

Furthermore, constitutional parts shown in the embodiments of the present invention are independently shown so as to represent different characteristic functions. Thus, it does not mean that each constitutional part is constituted in a constitutional unit of separated hardware or one software. In other words, each constitutional part includes each of enumerated constitutional parts for convenience. Thus, at least two constitutional parts of each constitutional part may be combined to form one constitutional part or one constitutional part may be divided into a plurality of constitutional parts to perform each function. The embodiment where each constitutional part is combined and the embodiment where one constitutional part is divided are also included in the scope of the present invention, if not departing from the essence of the present invention.

In addition, some of constituents may not be indispensable constituents performing essential functions of the present invention but be selective constituents improving only performance thereof. The present invention may be implemented by including only the indispensable constitutional parts for implementing the essence of the present invention except the constituents used in improving performance. The structure including only the indispensable constituents except the selective constituents used in improving only performance is also included in the scope of the present invention.

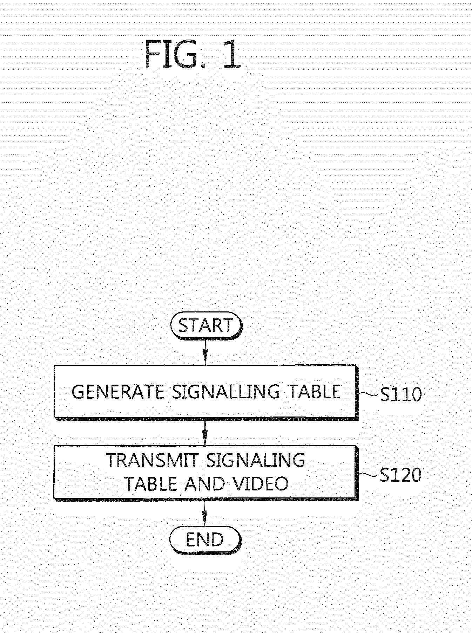

FIG. 1 is a flow chart showing a method of transmitting stereoscopic video information according to an exemplary embodiment of the present invention. The method for transmitting stereoscopic video information according to the exemplary embodiment of FIG. 1 may be applied to a digital broadcasting based stereoscopic video service.

As shown in FIG. 1, a method of transmitting stereoscopic video information according to the exemplary embodiment of the present invention includes generating a signaling table (S110). The apparatus for transmitting video information generates a signaling table. In the signaling table, information used to receive and reproduce video data in an apparatus for receiving video information, for example, information indicating a program type, information indicating characteristics of encoding streams configuring video data, and the like, may be defined.

The information and/or protocol used to receive video data and reproduce the video data may include, for example, program specific information (PSI), program and system information protocol (PSIP), and the like.

The PSI means metadata including information required for demultiplexing transport streams (TSs) and reproducing video information in a table formal, in the MPEG-2. The apparatus for receiving video information may refer to the PSI information in order to discriminate a TS packet required for conversion of an elementary stream (ES), selection of a channel, or the like.

As an example, the PSI may include tables such as a program association table (PAT), a conditional access table (CAT), a program map table (PMT), and a network information table (NIT). Particularly, the PMT may include program elements configuring a single program and/or information on video streams configuring video data in the program, and the like.

The PSIP, which is a protocol associated with digital broadcasting, is a communication protocol used to transmit information on each channel of the transport stream. The PSIP may include a system time table (STT) transferring time information, a master guide table (MGT) managing a transmission table, a virtual channel table (VCT) providing virtual channel information, an event information table (EIT) providing each program information, and the like. The PSIP may have a configuration similar to that of the PSI.

The signaling table may be the PMT of the PSI and/or the VCT or EIT of the PSIP. Each information included in the signaling table may be defined in a stream type and/or a descriptor of the PMT, a stream type and/or a descriptor of the VCT, or a descriptor of the EIT. In addition, since the PSIP may have a configuration similar to that of the PSI. The signaling table will be described based on the PMT hereinafter for convenience.

Referring to FIG. 1, the apparatus of providing stereoscopic video information transmits the signaling table and the video that are generated at the generating of the signaling table (S110) to an apparatus for receiving video information (S120).

Herein, the signaling table may include at least one of the stream type information, the stereoscopic program information descriptor, the stereoscopic additional video stream descriptor of the video.

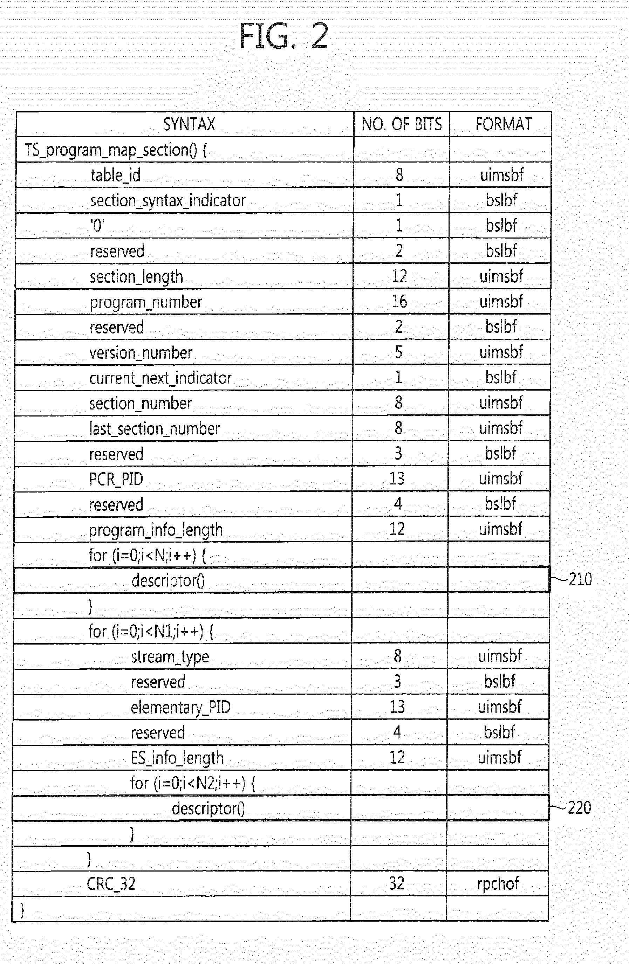

Hereinafter, the signaling table will be described with reference to FIGS. 2 to 8. FIG. 2 is a diagram showing an example of a program map table (PMT) structure for a digital broadcasting service. As described above, the PMT is an example of the signaling table. A format shown in FIG. 2 is defined as follows.
bslbf: Bit String, Left Bit First
rpchof: Remainder Polynomial Coefficients, Highest Order First
tcimsbf: Two's Complement Integer, Msb (Sigh) Bit First
uimsbf: Unsigned Integer, Most Significant Bit First
vlclbf: Variable Length Code, Left Bit First

The PMT may include a program level descriptor in which information indicating a program type provided in the digital broadcasting is defined, a stream level descriptor in which information indicating characteristics of elementary streams (ESs) configuring the video data is defined, a stream type, and the like. The PMT may provide information for indentifying a program, information on characteristics of encoding steams, and the like. Referring to FIG. 2, the program level descriptors may be positioned at a descriptor 210 portion within a PMT syntax, and the stream level descriptors may be positioned at a descriptor 220 portion with in the PMT syntax.

Hereinafter, descriptors according to the example of the present invention are not limited to their names. That is, descriptors performing roles that are equal or similar to those of the descriptors according to the example of the present invention will fall within the scope of the present invention.

Further, hereinafter, each of syntax elements included in the descriptor will be called a field. Hereinafter, fields defined in the example of the present invention are not limited to their names. That is, fields indicating information that is equal or similar to that of the fields will fall within the scope of the present invention. In addition, all of the fields defined in the present invention need not to be used. That is, the fields may be used or may not be used as needed.

### Service-compatible Method Using Reference Video And Additional video

It means the service that the base video, that is, the 2D video is provided in the HDTV and the stereoscopic 3D video provided in the 3DTV by combining the base video and the additional video as the left video and the right video. It transmits a left video and a right video by the 3D video stream formed in a dual stream of the base video and the additional video stream.

In order to provide the compatibility with the existing 2D broadcast service, the new stream type, the stereoscopic program information descriptor, and the stereoscopic additional video stream descriptor may be defined in the program map table (PMT) of the program specific information (PSI). That is, the signaling table may include at least one of the stream type information, the stereoscopic program information descriptor, the stereoscopic additional video stream descriptor of the video. Herein, the stereoscopic program information descriptor may be the program level descriptor and may be positioned at the descriptor 210 portion. In addition, the stereoscopic additional video stream descriptor may be the stream level descriptor and may be positioned at the descriptor 220 portion.

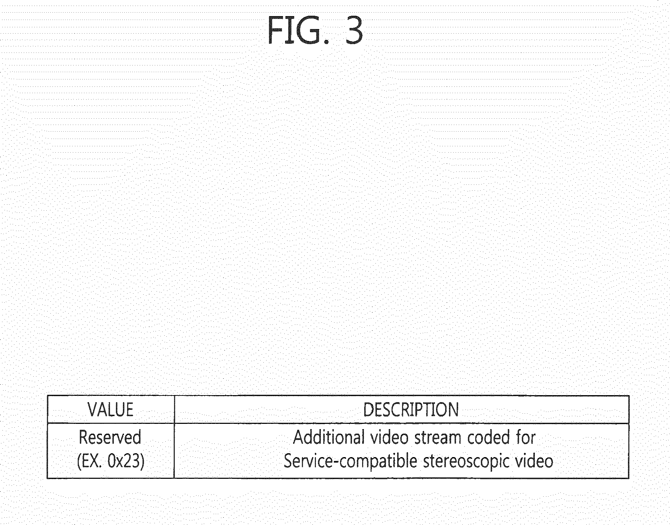

FIG. 3 is a diagram showing an additional video stream type as a new strip type according to the exemplary embodiment of the present invention.

The stream type may be used to define a codec type of the encoding stream or be used to identify a form and/or a type of a stereoscopic video service.

In order to prevent the malfunction of the existing 2D broadcast terminal according to the signaling of the 3DTV broadcast service, as shown in FIG. 3, the new stream type is assigned to the additional video stream, among the reserved codes. That is, the stream type information may include a stream type of additional video configuring a service-compatible scheme stereoscopic video. Therefore, since the existing 2D broadcast terminal does not read the additional video stream configuring the service-compatible scheme stereoscopic video and thus, may prevent the malfunction.

As shown in FIG. 3, among the reserved codes for the stream of the additional video configuring the service-compatible scheme stereoscopic video, for example, a code of 0x23 may be assigned. However, the code for the stream is not limited to 0x23 and may be any one of the reserved codes according to the setting.

When a new stream type is set as in the example of FIG. 3, the existing receiver may not recognize the new stream type. Therefore, the setting of the new stream type has an advantage in that it may allow a video corresponding to the new stream type not to be reproduced in the existing receiver.

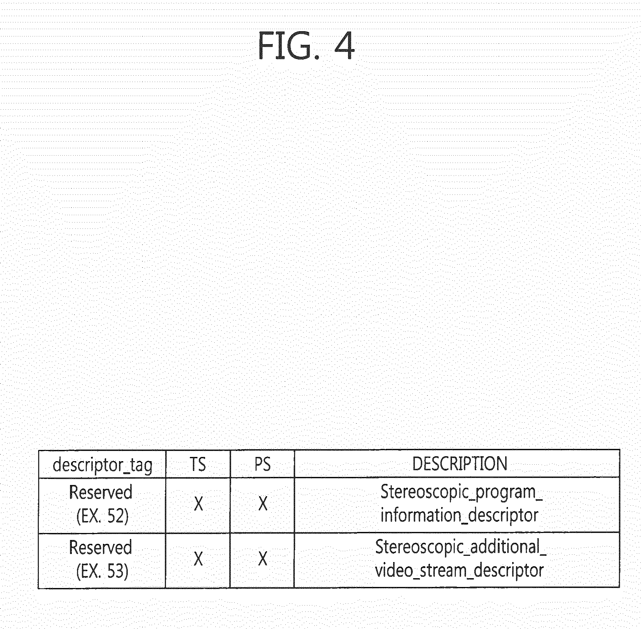

FIG. 4 is a diagram showing a descriptor tag value according to the embodiment of the present invention.

As shown in FIG. 4, in order to prevent the malfunction of the existing HDTV broadcast terminal according to the addition of the new descriptor for the 3DTV broadcast service signaling, a code of the reserved codes may be assigned for the stereoscopic program information descriptor and the stereoscopic additional video stream descriptor. As shown in FIG. 4, for example, the tag value descriptor_tag of 52 may be assigned to, for example, the stereoscopic program information descriptor and the tag value of 53 may be assigned to the stereoscopic additional video stream descriptor. However, the tag value for each descriptor is not limited to 52 and 53 and may be changed according to the setting.

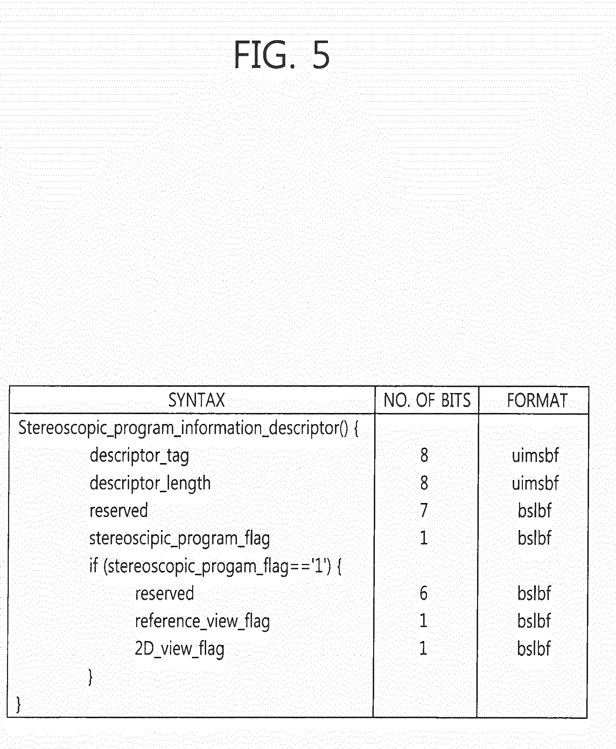

FIG. 5 is a diagram showing a stereoscopic program information descriptor according to the embodiment of the present invention. The stereoscopic program information descriptor is the program level descriptor and referring back to FIG. 2, is used as the descriptor of a first loop 210 of the PMT table.

The signaling table may include a field indicating whether the program included in the video is the 3D program. As an example, a field called stereoscopic_program_flag may be defined in the descriptor in order to indicate the above-mentioned information. As the field dividing the 3D program and the 2D program, when the field is, for example, '1', the field may represent a 3D program and when the field is, for example, '0', the field may represent the 2D program. In addition, in some cases, the 2D program, the service-compatible scheme 3D program, the frame-compatible scheme 3D program may be separately indicated.

The signaling table may include a field indicating whether the video is the left video. As an example, a field called reference_view_flag may be defined in the descriptor in order to indicate the above-mentioned information. For example, when being included in the program level indicator, the field may be used as a field dividing whether the reference video is the left video and the right video and when the field is '1', the field indicates that the reference video is the left video and when the field is '0', the field indicates that the reference video is the right video.

The signaling table may include the field indicating whether the additional video included in the 3D program is output when the 3D program is reproduced in the 2D mode in the program receiving apparatus. The service-compatible scheme transfers the reference video and the additional video to the program receiving apparatus and may reproduce the 3D program in the 2D mode by the setting of the user using the program receiving apparatus. Therefore, when reproducing only any one of the reference video and the additional video, whether any of them is reproduced is problematic. The 3D program of the service-compatible scheme may be serviced by a method for transmitting, for example, the reference video through the existing broadcast network and transmitting the additional video through a broadband network. In this case, the additional video may generally provide the relatively quality of high video. In addition, the case in which the reception of the reference video of two videos is unstable may also occur.

Therefore, the signaling table may include the field indicating whether the additional video included in the 3D program is output when the 3D program is reproduced in the 2D mode in the program receiving apparatus. As an example, a field called 2D_view_flag may be defined in the descriptor in order to indicate the above-mentioned information. When the field value is '1', the reference video may be displayed and when the field value is '0', the additional video may be displayed.

Further, the field indicating whether the additional video is output is not limited to ones included in the program level indicator but may be included in the stream level indicator. In addition, the field is not limited to the setting according to the field value and when the 3D program is reproduced in the 2D mode in the program receiving apparatus by various modifications, this may be practiced to indicate whether the additional video included in the 3D program is output, and is included in the idea of the present invention through various modifications.

As shown in FIG. 5, the stereoscopic program information descriptor may include at least one of a field indicating whether the program included in the video is the 3D program, a field indicating whether the video is the left video, a field indicating whether the additional video included in the 3D program is output when the 3D program is reproduced in the 2D mode in the program receiving apparatus, and a field indicating the service-compatible mode of the program included in the video.

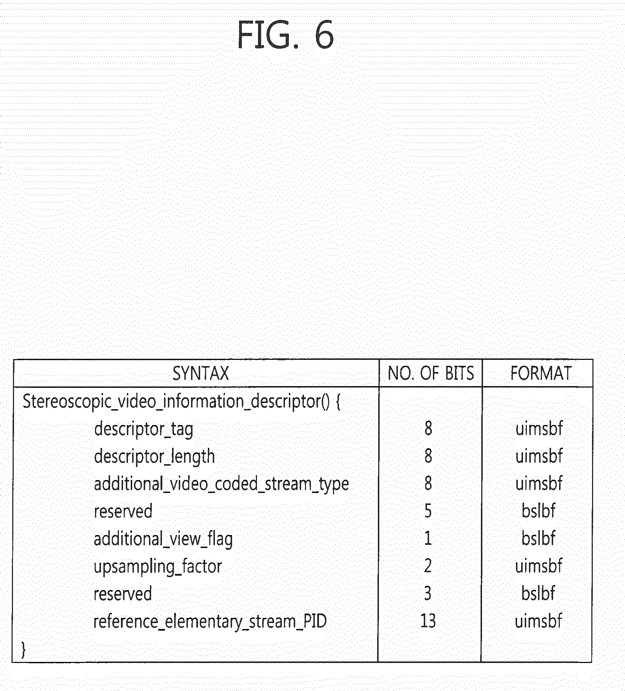

FIG. 6 is a diagram showing a stereoscopic additional video strip descriptor according to another embodiment of the present invention. The stereoscopic additional video stream descriptor is the stream level descriptor and referring back to FIG. 2, is used as the descriptor of a second loop 220 of the PMT table. As shown in FIG. 6, the stereoscopic additional video stream descriptor may include at least one of the field indicating the encoding method of the additional video, the field indicating whether the additional video is the left video, and upsampling information corresponding to the additional video.

The signaling table may include a field indicating the encoding method of the additional video. As an example, a field called additional_video_coded_stream_type may be defined in the descriptor in order to indicate the above-mentioned information. For example, ISO/IEC 13818-1 PEG-2 Systems: having stream_type value shown in Table 2-29 of 2007.

The signaling table may include a field indicating whether the additional video is the left video. As an example, a field called additional_view_flag may be defined in the descriptor in order to indicate the above-mentioned information. For example, as the field dividing that the additional video is the left video or the right video, when the field is '1', the additional video represents the left video and when the field is '0', the additional video represents the right video.

The signaling table may include the upsampling information corresponding to the additional data. As an example, a field called upsampling_factor may be defined in the descriptor in order to indicate the above-mentioned information.

For example, the field value of '00' may indicate that the resolution of the additional video is equal to the resolution of the reference video and the upsampling is not performed, the field value of '01' may indicate that the vertical resolution of the additional video is 1/2 of the vertical resolution of the reference video and the upsampling in the horizontal direction is required, the field value of '10' may indicate that the horizontal resolution of the additional video is 1/2 of the horizontal resolution of the reference video and the upsampling in the vertical direction is required, and the field value of '11' may indicate that the horizontal/vertical resolutions of the additional video each are 1/2 of the horizontal/vertical resolutions of the reference video and the upsampling in the horizontal and vertical direction is required.

The signaling table may include the packet identification (PID) information of the reference video stream corresponding to the additional video stream. As an example, a field called reference_elemenatry_stream_PID may be defined in the descriptor in order to indicate the above-mentioned information.

The descriptors defined in the above examples may have various forms while including the above-mentioned information and are not limited to forms shown in each example. In addition, each field may not be defined within the single indication but may be defined within the separate indicator and may be independently used.

### Service-compatible Mode Using Reference Video and Frame Compatible Video

In addition to the service-compatible scheme using the reference video and the additional video, the service-compatible scheme using the reference video and the frame compatible video can be performed. That is, when using 2D mode in the 2D broadcast receiving apparatus or the 3D broadcast receiving apparatus, the service-compatible scheme may be set to use the reference video so as to display the 2D video and when the 3D mode is used in the 3D broadcast receiving apparatus, the service-compatible scheme may be set to use the frame compatible video so as to display the 3D video.

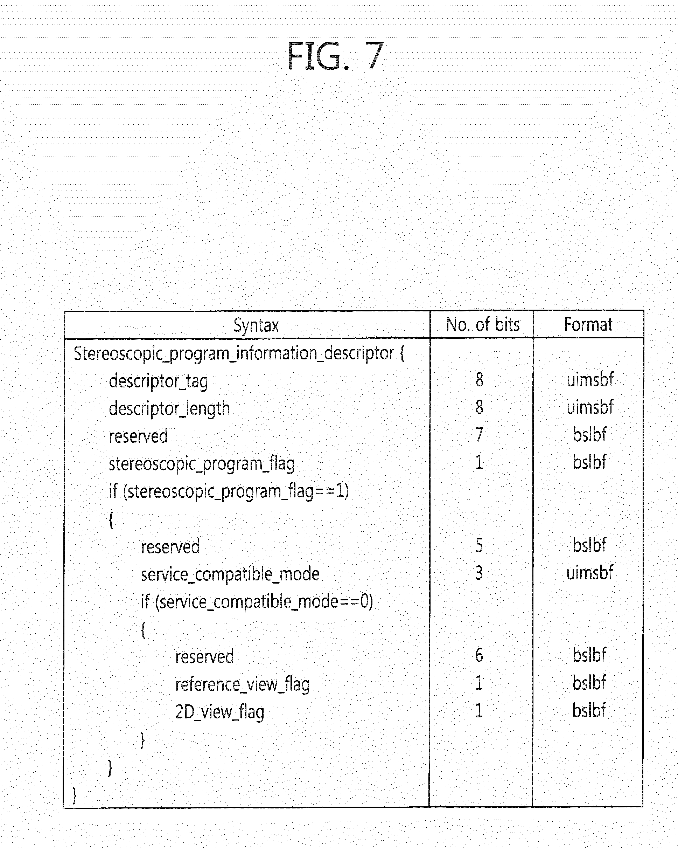

FIG. 7 is a diagram showing a stereoscopic program information descriptor according to the embodiment of the present invention.

As shown in FIG. 7, all of the fields of the stereoscopic program information descriptor described in the service-compatible mode using the aforementioned reference video and the additional video are provided and the field indicating the service-compatible mode of the program included in the video is further provided, wherein the field indicating the service-compatible mode may be set to indicate any one of the mode using the reference video and the additional video and the mode using the reference video and the frame compatible video. As an example, a field called service_compatible_mode may be defined in the descriptor in order to indicate the above-mentioned information. For example, when the field value is '0', the 3D broadcast service uses the service-compatible scheme provided using the reference video and the additional video and when the field value is '1', the additional video is configured in the frame compatible scheme, such that the 3D service may be provided by only the additional video regardless of the reference video. In this case, the reference video may be used for the 2D service.

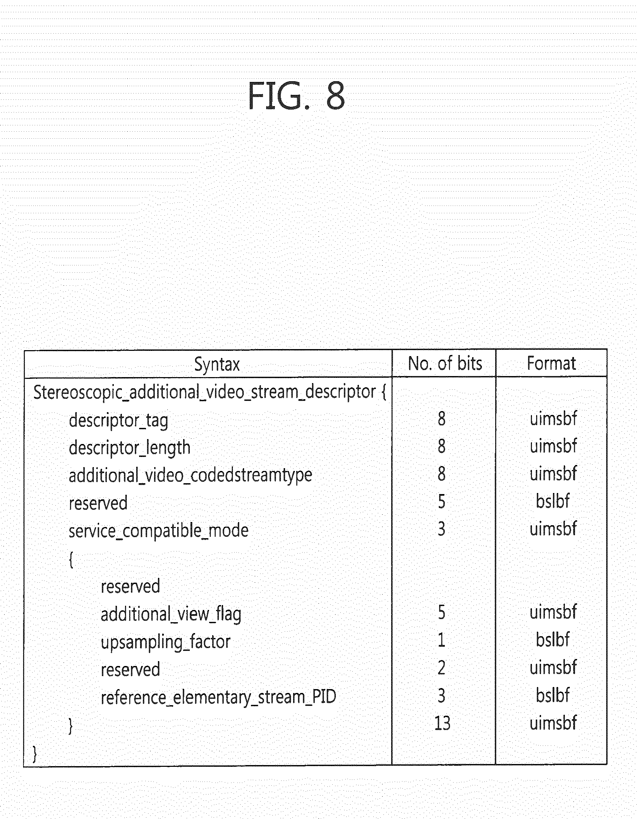

FIG. 8 is a diagram showing a stereoscopic additional video stream descriptor according to another embodiment of the present invention.

As shown in FIG. 8, all of the fields of the stereoscopic additional video stream descriptor described in the service-compatible mode using the aforementioned reference video and the additional video are provided and the field indicating the service-compatible mode of the program included in the video is further provided, wherein the field indicating the service-compatible mode may be set to indicate any one of the mode using the reference video and the additional video and the mode using the reference video and the frame compatible video. As an example, a field called service_compatible_mode may be defined in the descriptor in order to indicate the above-mentioned information. For example, when the field value is '0', the 3D broadcast service uses the service-compatible scheme provided using the reference video and the additional video and when the field value is '1', the additional video is configured in the frame compatible scheme, such that the 3D service may be provided by only the additional video regardless of the reference video. In this case, the reference video may be used for the 2D service.

### Apparatus for Transmitting Steroscopic Video Information

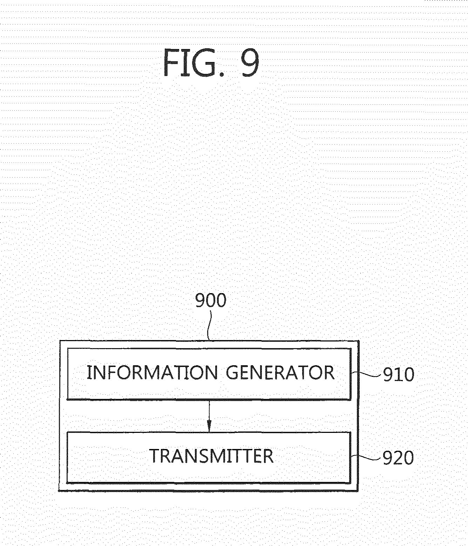

FIG. 9 is a block diagram of an apparatus for transmitting stereoscopic video information according to an exemplary embodiment of the present invention.

As shown in FIG. 9, an apparatus 900 for transmitting stereoscopic image information according to an exemplary embodiment of the present invention includes an information generator 910 that generates a signaling table including video related information and a transmitter 920 that transmits the signaling table and the video, wherein the signaling table may include at least any one of stream type information of the image, a stereoscopic program information descriptor, and a stereoscopic additional video stream description.

Herein, the stream type information may include a stream type of additional video configuring a service-compatible scheme stereoscopic image.

In addition, the signaling table may be any one of a program map table (PMT) of program specific information (PSI), a virtual channel table (VCT) of program and system information protocol (PSIP), and an event information table (EIT) of the PSIP.

In addition, the stereoscopic program information descriptor may be a program level descriptor and the stereoscopic additional video stream descriptor may be a stream level descriptor.

The signaling table may include a field indicating whether the program including the video is the 3D program and the signaling table may include the field indicating whether the video is the left video. The signaling table may include the field indicating whether the additional video included in the 3D program is output when the 3D program is reproduced in the 2D mode in the program receiving apparatus.

In addition, the signaling table includes the field indicating the service-compatible mode of the program included in the video, wherein the field indicating the service-compatible mode may indicate any one of the mode using the reference video and the additional video and the mode using the reference video and the frame compatible video.

The stereoscopic program information descriptor may include at least one of a field indicating whether the program included in the video is the 3D program, a field indicating whether the video is the left video, a field indicating whether the additional video included in the 3D program is output when the 3D program is reproduced in the 2D mode in the program receiving apparatus, and a field indicating the service-compatible mode of the program included in the video.

In addition, the stereoscopic additional video stream descriptor may include at least one of the field indicating the encoding method of the additional video, the field indicating whether the additional video is the left video, and upsampling information corresponding to the additional video.

The detailed operation of the apparatus for transmitting stereoscopic video information according to the exemplary embodiment of the present invention follows the method for transmitting stereoscopic video information as described above.

## Claims

1. A method of transmitting stereoscopic video information, comprising:
generating a signaling table including video related information; and
transmitting the signaling table and the video,
wherein the signaling table includes any one of stream type information, stereoscopic program information descriptor, and stereoscopic additional video stream descriptor of the video.

2. The method of claim 1, wherein the stream type information includes a stream type of the additional video configuring a service-compatible scheme stereoscopic video.

3. The method of claim 1, wherein the signaling table is any one of a program map table (PMT) of program specific information (PSI), a virtual channel table (VCT) of program and system information protocol (PSIP), and an event information table (EIT) of the PSIP.

4. The method of claim 1, wherein the stereoscopic program information descriptor is a program level descriptor.

5. The method of claim 1, wherein the stereoscopic additional video stream descriptor is a stream level descriptor.

6. The method of claim 1, wherein the signaling table includes a field indicating whether a program included in the video is a 3D program.

7. The method of claim 1, wherein the signaling table includes a field indicating whether the video is a left video.

8. The method of claim 1, wherein the signaling table includes a field indicating whether the additional video included in the 3D program is output, when the 3D program is reproduced in a 2D mode in a program receiving apparatus.

9. The method of claim 1, wherein the signaling table includes a field indicating a service-compatible mode of the program included in the video, the field indicating the service-compatible mode indicating any one of a mode using a base video and the additional video and a mode using the base video and a frame compatible video.

10. The method of claim 1, wherein the stereoscopic program information descriptor includes at least one of a field indicating whether the program included in the video is the 3D program, a field indicating whether the video is the left video, a field indicating whether the additional video included in the 3D program is output when the 3D program is reproduced in the 2D mode in the program receiving apparatus, and a field indicating the service-compatible mode of the program included in the video.

11. The method of claim 1, wherein the stereoscopic additional video stream descriptor includes at least one of a field indicating an encoding method of the additional video, a field indicating whether the additional video is the left video, and upsampling information corresponding to the additional video.

12. An apparatus for transmitting stereoscopic video information, comprising:
an information generator generating a signaling table including video related information; and
a transmitter transmitting the signaling table and the video,
wherein the signaling table includes any one of stream type information, stereoscopic program information descriptor, and stereoscopic additional video stream descriptor of the video.

13. The apparatus of claim 12, wherein the stream type information includes a stream type of the additional video configuring a service-compatible scheme stereoscopic video.

14. The apparatus of claim 12, wherein the signaling table is any one of a program map table (PMT) of program specific information (PSI), a virtual channel table (VCT) of program and system information protocol (PSIP), and an event information table (EIT) of the PSIP.

15. The apparatus of claim 12, wherein the stereoscopic program information descriptor is a program level descriptor.

16. The apparatus of claim 12, wherein the stereoscopic additional video stream descriptor is a stream level descriptor.

17. The apparatus of claim 12, wherein the signaling table includes a field indicating whether a program included in the video is a 3D program.

18. The apparatus of claim 12, wherein the signaling table includes a field indicating whether the video is a left video.

19. The apparatus of claim 12, wherein the signaling table includes a field indicating whether the additional video included in the 3D program is output, when the 3D program is reproduced in a 2D mode in a program receiving apparatus.

20. The apparatus of claim 12, wherein the signaling table includes a field indicating a service-compatible mode of the program included in the video, the field indicating the service-compatible mode indicating any one of a mode using a reference video and the additional video and a mode using the reference video and a frame compatible video.

21. The apparatus of claim 12, wherein the stereoscopic program information descriptor includes at least one of a field indicating whether the program included in the video is the 3D program, a field indicating whether the video is the left video, a field indicating whether the additional video included in the 3D program is output when the 3D program is reproduced in the 2D mode in the program receiving apparatus, and a field indicating the service-compatible mode of the program included in the video.

22. The apparatus of claim 12, wherein the stereoscopic additional video stream descriptor includes at least one of a field indicating an encoding method of the additional video, a field indicating whether the additional video is the left video, and upsampling information corresponding to the additional video.
